# EUROPÄISCHE PATENTANMELDUNG

(11) **EP 4 599 929 A1**
(43) Veröffentlichungstag der Anmeldung: **13.08.2025**
(21) Anmeldenummer: 25156799.6
(22) Anmeldetag: 10.02.2025
(51) Int. Cl.: B01J 23/745, B01J 29/85, C01B 3/00

(54) **VERWENDUNG EINES KATALYSATORS MIT NIEDRIGER AKTIVIERUNGSTEMPERATUR ZUR EINSTELLUNG DES TEMPERATURABHÄNGIGEN GLEICHGEWICHTES VON ORTHO-/PARA-WASSERSTOFFGEMISCHEN**

(30) Priorität: 09.02.2024 DE 102024000427
(71) Anmelder: C&CS Catalysts and Chemical Specialties GmbH, 85551 Kirchheim bei München (DE)
(72) Erfinder: Eberle, Hans-Jürgen, 81477 München (DE); Tißler, Arno, 93105 Tegernheim (DE)
(74) Vertreter: Eisenführ Speiser

(57) **Zusammenfassung**

Die vorliegende Erfindung betrifft primär die Verwendung eines bestimmten Katalysators zur Umwandlung von Wasserstoff-Allotropen. Außerdem betrifft die vorliegende Erfindung ein Verfahren zur Umwandlung von Wasserstoff-Allotropen unter Verwendung eines solchen Katalysators.

## Beschreibung

Die vorliegende Erfindung betrifft primär die Verwendung eines bestimmten Katalysators zur Umwandlung von Wasserstoff-Allotropen. Außerdem betrifft die vorliegende Erfindung ein Verfahren zur Umwandlung von Wasserstoff-Allotropen unter Verwendung eines solchen Katalysators.

Weitere Aspekte der vorliegenden Erfindung und bevorzugte Ausgestaltungen davon ergeben sich aus der folgenden Beschreibung und den beigefügten Patentansprüchen.

Die Erzeugung von Energie und chemischen Produkten aus natürlichen Ressourcen wie Erdöl oder Erdgas ist durch die limitierten Reserven in mittlerer Zukunft nicht mehr sinnvoll. Insbesondere bewirkt diese Nutzung einen hohen CO₂ Ausstoß, der zu einer globalen Erwärmung führt. Deren möglichen Folgen sind heute zwar nur abschätzbar, dass dies aber zu einer Existenzfrage der Menschheit wird, ist abzusehen. Ferner ist Erdöl aufgrund seiner Zusammensetzung und der Vielzahl von Basismolekülen für die chemische Industrie viel zu schade zum Verbrennen. Für den langfristigen Erfolg einer Energiewende und für den globalen Klimaschutz sind Alternativen zu fossilen Energieträgern von außerordentlicher Wichtigkeit. Wasserstoff wird hierbei eine Schlüsselrolle einnehmen, sei es als Energiespeicher oder als stoffliche Komponente für weitere Stoffumwandlungen. Klimafreundlich hergestellter Wasserstoff (= grüner Wasserstoff) ermöglicht es, die CO₂-Emissionen in mobilen und stationären Anwendungen zu senken. Dies gilt insbesondere für Anwendungen, bei denen eine direkte Nutzung von Strom aus erneuerbaren Energien nicht ausreicht oder nicht möglich ist. Die Wasserstofferzeugung aus regenerativen Ressourcen, der Transport und die Lagerung von Wasserstoff sind daher zentrale Aufgaben auf globaler Ebene.

Für die Speicherung und den Transport von Wasserstoff stellt die Verflüssigung und anschließende Lagerung in flüssiger Form wegen der deutlich vergrößerten Dichte oft die wirtschaftlichste Lösung dar. Dies gilt insbesondere dann, wenn die geografische Distanz von Erzeugungsort und Verbrauchsort sehr groß ist. Ein effizienter Transport in Pipelines würde einen extrem hohen Druck benötigen und würde unter diesen Bedingungen zu einer Versprödung der Metallrohre führen. Außerdem würden zahlreiche Hochdruckverdichter benötigt, die durch ihren hohen Energiebedarf den Transport letztendlich unwirtschaftlich machen würden. Daher werden Wasserstoffleitungen nur im lokalen Rahmen, innerhalb von Chemiestandorten oder Verbundstandorten eingesetzt.

Das Wasserstoffmolekül kann in zwei Varianten vorliegen (Allotropie), die sich in der Anordnung ihres ¹H-Kernspins unterscheiden, damit eine unterschiedliche Rotationsenergie aufweisen, die wiederum zu unterschiedlichen physikalischen Eigenschaften führen. Bei der para-Form sind die beiden Kernspins antiparallel angeordnet, bei der ortho-Form parallel. Die Allotropie des Wasserstoffs wurde schon in den 20er Jahren des letzten Jahrhunderts im Rahmen der Entwicklung der Quantentheorie entdeckt. Damit verbundene Namen sind z.B. Bonhoeffer, Heisenberg, Eucken, Mecke und Hund (U. Schindewolf, Bunsen-Magazin, 4.Jahrg., 6/2002, S.139 - 146).

Die beiden Allotrope liegen in einem temperaturabhängigen Gleichwicht nebeneinander vor: oberhalb 250 K besteht das Wasserstoff-Allotropengemisch aus 75 % der ortho-Form und 25 % aus der para-Form. Eine weitere Erhöhung der Umgebungstemperatur verändert dieses Verhältnis nicht mehr. In diesem Fall spricht man von Normal-Wasserstoff. Bei tiefen Temperaturen, wie sie für die Verflüssigung von Wasserstoff notwendig sind, verschiebt sich das Gleichgewicht immer mehr zur para-Form. Bei Temperaturen unterhalb von 20 K liegt nahezu nur noch die para-Form vor (DE 4403352 B4). Allerdings erfolgt die Gleichgewichtsumwandlung beim Abkühlen von der ortho- in die para-Form nur langsam, da die Wechselwirkungen zwischen den Kernen nur sehr schwach sind. Die Umwandlung von ortho-Wasserstoff in die para-Form ist exotherm mit einer Umwandlungsenergie von 527 KJ/kg. Umgekehrt ist die Umwandlung von der para-Form in die ortho-Form eine exergone Reaktion.

Bei der Verflüssigung von Wasserstoff spielt die Geschwindigkeit der ortho-para-Umwandlung wie auch die dabei auftretende Exothermie eine wichtige Rolle. Zum einen wird dadurch der Energieaufwand zur Verflüssigung notwendigerweise erhöht, da die freiwerdende Energie (527 kJ/kg) höher als die Verdampfungsenthalpie des para-Wasserstoffs (446 kJ/kg) ist, d.h. mit zunehmender ortho- zu para-Umwandlung verdampft Wasserstoff bzw. man muss weiterhin unter hohem Energieaufwand kühlen, damit die gesamte Menge flüssig bleibt. Zum anderen wird aufgrund der langsamen Gleichgewichtseinstellung ein gewisser Anteil des ortho-Wasserstoffs nicht zu para-Wasserstoff umgewandelt. Bei einer darauffolgenden Lagerung würde es durch die bei der Selbstumwandlung freiwerdende Energie zu einem Abdampfen und damit zu einem unerwünschten Verlust von flüssigem Wasserstoff kommen. Für kommerziellen flüssigen Wasserstoff wird deshalb ein Parawasserstoffanteil von mindestens 95% gefordert, was letztendlich mögliche Verdampfungsverluste deutlich minimiert (Lagerzeit 14 Tage, Wasserstoffverlust <1 %).

Um die geforderten niedrigen ortho-Wasserstoffgehalte zu erreichen, werden in allen industriellen Wasserstoff-Verflüssigungsanlagen Katalysatoren eingesetzt, die schon während des Abkühlungsprozesses die Gleichgewichtseinstellung beschleunigen. Wenn die Einstellung des jeweiligen Gleichgewichts so schnell wie die Abkühlgeschwindigkeit ist, wird beim Tripelpunkt keine weitere Energie frei. In der Praxis wird hierzu nahezu ausschließlich ein Katalysator auf Basis von paramagnetischem Eisenoxid (Fe₂O₃, IONEX^{®} Type O-P Catalyst,Molecular Products) eingesetzt. Dadurch kann heute schon eine signifikante Energieeinsparung (ca. 20 %) erreicht werden.

Die katalytische Umwandlung durch Wechselwirkung des Wasserstoffmoleküls mittels einer paramagnetischer Oberfläche/Spezies wurde bereits Anfang der 30er Jahre von Farkas und Sachse entdeckt (Farkas, A.; Sachse, H., Über die homogene Katalyse der Para-Ortho-Wasserstoffumwandlung unter Einwirkung paramagnetischer Ionen II; Z. Physik. Chem. B23 (1933), S. 19-27 25). Es sind zwar noch andere paramagnetische Katalysatoren beschrieben wie Ru/silicate, Ru/aluminate (US 9,714,168 B1), Cr₂O₃ auf Al₂O₃, CeO₂, Ni/Al₂O₃, MnO₂ auf Al₂O₃ und ungeträgert (D.H. Weitzel, W.V. Loebenstein, J.W. Draper and O.E. Park, J. Of Research of National Bureau of Standards, Vol. 60, Nr. 3, 1958), Oxysorb^{®}, ein CrO₃ auf SiO₂ und Apachi Nickel-Silika von Air Products (Jürgen Essler, Dissertation: Physikalische und technische Aspekte der Ortho-Para-Umwandlung (2012), Kapitel 5.5.3, S. 67 ff, Technische Universität Dresden). Alle bisher untersuchten Kandidaten waren weniger wirksam als der Standard-Eisenoxid-Katalysator.

In der WO 2024003290 A1 werden Eisenoxid-beladene hydrophobe Zeolithe, die zusätzlich noch Broensted-Zentren aufweisen, beschrieben, die ein besonders hohes Aktivitätspotential insbesondere im oberen Bereich der Abkühlung (bei der Wasserstoffverflüssigung) aufweisen.

Bei potentiell geeigneten Katalysatoren müssen eine Reihe von physikalischen Parametern betrachtet bzw. optimiert werden, um eine optimale Gesamtwirkung zu erzielen. Dies sind insbesondere die
1. Diffusion durch die Strömungsgrenzschicht an die Katalysatoroberfläche,
2. Diffusion in die Poren des Katalysators,
3. Adsorption an der Oberfläche des Katalysatorzentrums,
4. Oberflächenreaktion bzw. Wechselwirkung mit paramagnetischen Zentren oder ggf. mit Wasserstoffaustauschzentren
5. Desorption von der Oberfläche des Katalysatorzentrums,
6. Diffusion der Produkte aus den Poren und
7. Diffusion der Produkte durch die Strömungsgrenzschicht.

Ein effektiver Katalysator zeichnet sich dadurch aus, dass der Gesamtprozess in der gewünschten Geschwindigkeit abläuft. Der langsamste Schritt in dieser Prozesskette bestimmt damit die Gesamtgeschwindigkeit der gewünschten Reaktion.

Die Umwandlungsgeschwindigkeit kann durch verschiedene Methoden untersucht werden. Standardmäßig kann hier das unter der DE 4403352 B4 beschriebene Verfahren der Linde AG erwähnt werden. Hierbei werden physikalische Daten wie Temperatur und Druck vor der Umwandlung (vor dem Katalysator) und nach der Umwandlung (nach dem Katalysator) gemessen und mit den bekannten physikalischen Daten das para- zu ortho-Verhältnis berechnet. Dieses Verfahren ist in der DE 4403352 B4 im Detail beschrieben.

Ein Nachteil der bisher beschriebenen Katalysatoren ist die Aufnahme von Wasser bei der Lagerung oder während der Herstellkette/Aufbauphase der befüllten Reaktoren und Wärmetauscher, wenn der Katalysator mit Luftwasserdampf in Berührung kommt. Dieser Wasserdampf wird von bekannten Katalysatoren, sei es auf Basis eines Eisenoxidhydrates (lonex) oder auf Basis des oben angeführten Eisenoxidhaltigen-Zeolithen (WO 2024003290 A1), aufgenommen.

Das adsorbierte (aufgenommene) Wasser bewirkt eine starke Inhibierung der katalytischen Umlagerungsreaktion und muss deshalb aus dem Katalysator entfernt werden. Dieser Trocknungsschritt erfolgt in der Regel bei einem sogenannten Aktivierungsschritt im Reaktor/Wärmeaustauscher, bei dem neben Wasser auch andere adsorbierte Fremdgase mittels Spülen mit hochreinem, trockenem Wasserstoffgas bei Temperaturen von 120 °C bis zu 200 °C entfernt werden (C. Haberstroh, Chemie Ingenieur Technik, Volume 96, Special Issue Wasserstoff/-2024, S. 43 - 54).

Neuere Verfahrensvarianten auf Basis von Aluminium-basierten Wärmetauschern sind insbesondere für kleinere und mittlere Anlagen bevorzugt, da durch die bessere Wärmeleitfähigkeit des Aluminium-Struktur-Materials eine höhere Effizienz bei der Abkühlung erreicht werden kann.

Temperaturen von über 150°C können jedoch bereits zu materialbedingten Stabilitätsproblemen der eingesetzten auf Aluminium-Metall basierten Wärmeaustauscher führen. Ferner ist die Aktivierungsprozedur zeitaufwendig und gegebenenfalls können hohe Temperaturen auch zu Katalysatorschädigungen führen. Je niedriger die Aktivierungstemperatur und der dazu notwendige Zeitaufwand ist, desto höher fällt der Vorteil durch einen verbesserten Katalysator aus (Jürgen Essler, Dissertation: Physikalische und technische Aspekte der Ortho-Para-Umwandlung (2012), Kapitel 7, S. 87 ff).

Die heute zur o-p-Wasserstoff-Umwandlung einsetzbaren Katalysatoren weisen eine Reihe an Verbesserungspotentialen auf. Um die Herstellung, Lagerung und Transport von flüssigem Wasserstoff wirtschaftlicher und energiesparender zu gestalten, sollte ein verbesserter Katalysator folgendes Eigenschaftsprofil aufweisen:
- hohe Aktivität: ermöglicht geringeren Katalysatoreinsatz, kleinere Reaktoren, höhere Raumgeschwindigkeiten, höhere Produktivität,
- Aktivität bei höheren Temperaturen (> 80 K): ein breiterer Temperaturbereich ermöglicht eine kontinuierliche Einstellung des ortho-para-Gleichgewichtes, was zu geringeren Kühlkosten führt,
- Variabilität bezüglich Formgebung: ermöglicht Katalysatoren mit niedrigem Druckverlust, Anpassung an optimale Reaktorgeometrie, Zugang zu gecoateten Katalysatoren, wodurch das Anwendungsspektrum deutlich erhöht wird,
- Niedrige Temperatur zur Wasserabspaltung und damit eine Energie-und Zeitreduzierung des Aktivierungs- und Regenerierungsprozesses.

Primäre Aufgabe der vorliegenden Erfindung ist es, die Verwendung eines Katalysators zur Umwandlung von Wasserstoff-Allotropen bereitzustellen, welche die oben dargestellten Nachteile überwindet bzw. die hierin geschilderten vorteilhaften Eigenschaften besitzt.

Es sollte ein Katalysator bereitgestellt werden, der vorzugsweise eine hohe Konzentration an paramagnetischen und Broensted-Zentren, eine niedrige Wasserabspaltungstemperatur, eine hohe Neigung zur Adsorption von Wasserstoff und eine hohe Zugänglichkeit (Porosität) zur Minimierung von Diffusionshemmnissen aufweist, um in der Umwandlung von Wasserstoffallotropen verwendet zu werden. Hierdurch sollten Materialverluste vermieden, der Regenerationsaufwand geringgehalten und somit Energie eingespart werden.

Weitere Aufgabenstellungen, die der vorliegenden Erfindung zu Grunde liegen, ergeben sich aus den nachfolgenden Ausführungen und den beigefügten Patentansprüchen.

Die vorliegende Erfindung betrifft gemäß einem primären Aspekt die Verwendung eines Katalysators zur Umwandlung von Wasserstoff-Allotropen, vorzugsweise von ortho-Wasserstoff zu para-Wasserstoff und/oder umgekehrt, wobei der Katalysator ein Silico-Aluminophosphat (SAPO) ist.

Überraschenderweise wurde festgestellt, dass die erfindungsgemäße Verwendung eines Katalysators wie hierin beschrieben aufgrund seiner überraschend niedrigeren Aktivierungstemperatur insgesamt zu einer Erniedrigung der Prozesskosten der Wasserstoff-Verflüssigung führt. Außerdem wurde festgestellt, dass die hierin beschriebenen Katalysatoren vorzugsweise eine hohe Aktivität für die o-p-Umwandlung von Wasserstoff aufweisen, sogar, wenn diese im Reaktor bei Temperaturen unter 120 °C entwässert/aktiviert werden. Damit können vorzugsweise hohe Aktivierungstemperaturen und die damit verbundenen Materialprobleme vorzugsweise bei besonders temperaturempfindlichen Wärmeaustauschern vermieden werden. Außerdem wird noch Energie eingespart. Vorzugsweise lässt sich der hierin beschriebene Katalysator leichter und energieeffizienter, somit auch kostengünstiger, regenerieren.

Es war nicht vorhersehbar, dass ein SAPO die hierin beschriebenen vorteilhaften Eigenschaften für die Anwendung in der Umwandlung von Wasserstoffallotropen besitzt. Während die Verwendung von Metall-ausgetauschten Zeolithen für die ortho-para-Wasserstoffumwandlung zumindest ansatzweise bekannt ist (WO 2024003290 A1), ist die Verwendung von SAPOs für diesen Prozess nicht bekannt.

Silico-Aluminophosphate sind mikroporöse Strukturen, aufgebaut aus Aluminium und Phosphortetraedern, verbunden durch Sauerstoffbrücken. Wird ein Teil des Phosphors durch Silizium ersetzt, entstehen Strukturen mit Broensted-Zentren analog den bekannten Zeolithen. Als Beispiel hierfür zu nennen ist die Verwendung von SAPO-34, eines Silico-Aluminophosphates mit CHA-Struktur, für die Umsetzung von Methanol zu Olefinen (WO 2022085154).

SAPOs und modifizierte SAPOs finden aber auch vielfach Anwendungen in Prozessen zum Wärmemanagement (DE 102010055677) oder zur adsorptiven Stofftrennung, z.B. zur Entfernung von CO₂ aus Gasströmen (z.B. Chemie Ingenieur Technik, 3/2016, S. 372 - 378). Auch die Beschichtung derartiger SAPOs auf Aluminiumstrukturen von Wärmetauschermodulen ist bekannt (DE 102020055677). Solche beschichteten Wärmetauschermodule werden technisch eingesetzt, um absorbierten Wasserdampf bei Temperaturen unter 100 °C wieder abzuspalten. Dieser Vorteil wird beispielsweise in Geschirrspülern der neuesten Art zur Einsparung von Energie genutzt.

SAPOs können bei Raumtemperatur bis zu 35 % Wasser aufnehmen, eine Eigenschaft, die eigentlich eine Verwendung von SAPOs als Bestandteil von o-p-H₂-Umlagerungkatalysatoren verbietet. Wie oben beschrieben ist aber auch bekannt, dass SAPOs je nach Strukturtyp und Modifikation das aufgenommene Wasser bei Temperaturen von unterhalb 100 °C wieder abgeben können (DE1012010055677). Ein Temperaturbereich, der sicher stellen würde, dass die mit o-p-Wasserstoff- Katalysatoren befüllten Reaktoren (Wärmeaustauscher) keine Schädigung während der Aktivierungsphase (Wasserabspaltungsphase) erfahren.

Ohne rückschauende Betrachtungsweise wäre - auch im Lichte der oben zitierten Literatur - nicht zu erwarten gewesen, dass sich SAPOs besonders vorteilhaft im Rahmen einer hierin beschriebenen Verwendung eignen, v.a. nicht in dem von den Erfindern festgestellten Maße (wie hierin beschrieben).

Gemäß einer bevorzugten Ausführungsform ist der erfindungsgemäße verwendete SAPO hydrophil.

In einer bevorzugten Ausführungsform wird ein Katalysator zur Umwandlung von Wasserstoff-Allotropen verwendet, wobei der Katalysator ein mit einem (paramagnetisch wirksamen) Metall, vorzugsweise mit einem Metall ausgewählt aus der Gruppe bestehend aus Eisen, Rhodium, Nickel, Chrom und Molybdän, dotiertes, vorzugsweise hydrophiles, Silico-Aluminophosphat (SAPO) ist.

Überraschenderweise wurde gefunden, dass Metall-dotierte, vorzugsweise hydrophile SAPOs eine hohe Aktivität für die o-p-Umwandlung von Wasserstoff aufweisen, wenn diese im Reaktor auch bei Temperaturen unter 120 °C entwässert/aktiviert werden.

Gemäß einer bevorzugten Ausgestaltung wird die Metalldotierung durch einen Flüssigphasenionentausch oder Festkörperionentausch durchgeführt.

In einer weiteren bevorzugten Ausführungsform wird ein Katalysator erfindungsgemäß verwendet, wobei das Metall eine Fe-Verbindung, bevorzugt eine Fe-Sauerstoff-Verbindung, besonders bevorzugt ein Fe-Oxidhydrat, oder Mischungen davon, ist.

Für die hierin beschriebene erfindungsgemäße Verwendung haben sich Katalysatoren als besonders bevorzugt erwiesen, welche mit oben genannten Fe-Verbindungen dotiert sind.

Besonders bevorzugt ist eine erfindungsgemäße Verwendung, wobei der Katalysator eine Wasserdesorption unterhalb von 150 °C, besonders bevorzugt unter 120 °C, aufweist.

In einer weiteren bevorzugten Ausführungsform wird ein Katalysator erfindungsgemäß verwendet, wobei das Silico-Aluminophosphat die Kristallstruktur CHA aufweist.

Für die hierin beschriebene erfindungsgemäße Verwendung haben sich Katalysatoren, die eine Kristallstruktur CHA haben, als besonders bevorzugt erwiesen.

Besonders bevorzugt ist eine erfindungsgemäße Verwendung, wobei der Katalysator einen Eisengehalt, bestimmt als Fe₂O₃, von 1 bis 20 Gew. %, bevorzugt von mindestens 5 Gew.- %, besonders bevorzugt von mindestens 10 Gew.-% aufweist.

Für die hierin beschriebene erfindungsgemäße Verwendung haben sich Katalysatoren, die einen Eisengehalt wie hierin beschrieben aufweisen, als besonders bevorzugt erwiesen.

Der Eisengehalt der SAPOs, die für die hierin beschriebene Verwendung verwendet werden, wird vorzugsweise mit Hilfe von Standards wie der ICP- (Induktiv gekoppeltes Plasma) oder AAS-Methode (Atomabsorptionsspektroskopie) bestimmt.

Gemäß einer weiteren bevorzugten Ausführungsform wird ein Katalysator erfindungsgemäß verwendet, wobei der Katalysator erhältlich oder erhalten ist durch ein Herstellverfahren, bei dem mindestens eine oxidative Temperaturbehandlung mit einer Sauerstoff/Inertgas-Mischung, vorzugsweise Luft, in einem Temperaturbereich zwischen 200 und 600 °C, vorzugsweise zwischen 300 und 500 °C, des Katalysators erfolgt.

Die vorzugsweise auf diese Weise hergestellten Katalysatoren haben sich bei der erfindungsgemäßen Verwendung als besonders geeignet herausgestellt.

Gemäß einer weiteren bevorzugten Ausführungsform wird ein Katalysator erfindungsgemäß verwendet, wobei der Katalysator erhältlich oder erhalten ist durch ein Herstellverfahren, bei dem mindestens eine reduktive Temperaturbehandlung mit Wasserstoff, bevorzugt mit einer Wasserstoff/Inertgas-Mischung, besonders bevorzugt mit einer Wasserstoff/Stickstoff-Mischung, in einem Temperaturbereich zwischen 50 bis 500 °C, bevorzugt zwischen 100 bis 350 °C, besonders bevorzugt zwischen 120 bis 250 °C, des Katalysators erfolgt.

Gemäß einer weiteren bevorzugten Ausführungsform wird ein Katalysator erfindungsgemäß verwendet, wobei der Katalysator erhältlich oder erhalten ist durch ein Herstellverfahren, bei dem mindestens einmal eine Kombination einer oxidativen Temperaturbehandlung gefolgt von einer reduktiven Temperaturbehandlung durchgeführt wird, wie hierin beschrieben.

Besonders bevorzugt ist eine erfindungsgemäße Verwendung, wobei der Katalysator mit einer, vorzugsweise durchschnittlichen, Körnung von 0,2 mm bis 2 mm, bevorzugt kleiner als 1 mm, besonders bevorzugt kleiner 0,7 mm vorliegt.

Eine solche Körnung ist für eine erfindungsgemäße Verwendung besonders vorteilhaft.

Die Körnung der Katalysatoren soll im Rahmen der vorliegenden Erfindung vorzugsweise so verstanden werden, dass es sich um den durchschnittlichen Durchmesser der Katalysatorpartikel handelt.

In einer bevorzugten Ausführungsform wird ein erfindungsgemäßer Katalysator verwendet, wobei der Katalysator als Kugel vorliegt.

Vorzugsweise liegt der Katalysator kugelförmig vor, um in vorteilhafter Weise wie hierin beschrieben erfindungsgemäß verwendet zu werden.

Besonders bevorzugt ist eine erfindungsgemäße Verwendung, wobei der Katalysator als Formkörper, hergestellt durch Formgebungsprozesse, vorzugsweise ausgewählt aus der Gruppe bestehend aus Kompaktierung, Tablettierung, Granulation, Extrusion, Sprühtrocknung und Beschichtung von geometrischen Strukturen, Behältern oder Leitungen, eingesetzt wird.

In einer bevorzugten Ausführungsform wird ein erfindungsgemäßer Katalysator bei der Herstellung von flüssigem Wasserstoff, dessen Lagerung und/oder Transport verwendet.

Die vorliegende Erfindung betrifft gemäß einem sekundären Aspekt ein Verfahren zur Umwandlung von Wasserstoff-Allotropen, vorzugsweise von ortho-Wasserstoff zu para-Wasserstoff und/oder umgekehrt, umfassend oder bestehend aus folgenden Schritten:
- Bereitstellen eines Ausgangsgemisches aus oder umfassend ortho- und para-Wasserstoff,
- Abkühlen des Ausgangsgemisches und Umsetzen von ortho-Wasserstoff zu para-Wasserstoff unter Verwendung eines Katalysators wie hierin definiert.

Überraschenderweise hat sich herausgestellt, dass die Verwendung eines Katalysators wie hierin beschrieben vorzugsweise besonders geeignet ist für das oben beschriebene Verfahren.

Weitere bevorzugte Ausführungsformen eines solchen Verfahrens ergeben sich im Hinblick auf die oben beschriebenen bevorzugten Ausführungsformen in Verbindung mit den anderen Ausgestaltungen der vorliegenden Erfindung.

Nachfolgend wird die Erfindung anhand von besonders bevorzugten Beispielen näher erläutert.

### Beispiele

Ein kommerziell beschafftes SAPO-34 Material mit einer vom Hersteller angegebenen Zusammensetzung von 10 Gew.-% SiO₂; 40 Gew.-% Al₂O₃, 50 Gew.-% P₂O₅ in der H-Form, wurde - für die Zwecke der Optimierung im Rahmen einer erfindungsgemäßen Verwendung oder eines erfindungsgemäßen Verfahrens, wie hierin beschrieben - mit einer Ammoniumnitrat-Lösung behandelt, anschließend gewaschen und getrocknet und der resultierende Ammonium-SAPO danach als Ausgangsmaterial für die Herstellung besonders bevorzugter Katalysatoren verwendet. Der Eisengehalt der SAPOs wurde mit Hilfe von Standards wie der ICP- (Induktiv gekoppeltes Plasma) oder AAS-Methode (Atomabsorptionsspektroskopie) bestimmt.

### Beispiel 1): Herstellung eines eisenhaltigen SAPO-Pulvers mittels Flüssigphasenionentausch:

50 Gramm Ammonium-SAPO-34 wurden in 0,5 Liter einer wässrigen Lösung mit 2,25 Gramm Eisennitrat bei 60 °C 1 Stunde gerührt. Danach wurde abfiltriert und bei 120 °C getrocknet. Danach wurde der Fe₂O₃ Gehalt des Materials mit 1,5 Gew.-% bestimmt. Für die Bestimmung der ortho-para Umwandlung wurde die Probe zuvor in einer Handpresse kompaktiert (ca. 100 bar), zerkleinert und die über eine Siebung erhaltene Korngrößenfraktion von 0,3 bis 0,8 mm verwendet. Im Reaktor wurde die Probe bei 120 °C über 2 Stunden mit Wasserstoff gespült (Aktivierung) und die ortho-/ para-Wasserstoffumwandlung gemäß der in DE 4403352 beschriebenen Methode getestet.

### Beispiel 2):

Das in Beispiel 1 hergestellte Material wurde nach der Trocknung bei 450 °C über 4 Stunden an Luft thermisch behandelt und nach Abkühlung analog zu Beispiel 1 verarbeitet und getestet. Vor der Bestimmung der ortho-para Umwandlung wurde die Probe bei 120 °C über 2 Stunden mit Wasserstoff gespült.

### Beispiel 3):

Ein Eisen-SAPO-34 Pulver wurde analog zu Beispiel 1 hergestellt, wobei der Eisennitrat-Anteil verdoppelt wurde d.h. es wurden 5,5 Gramm Eisennitrat eingesetzt. Der Fe₂O₃-Anteil wurde mit 3 Gew.-% bestimmt, analog zu Beispiel 1 verarbeitet und in der ortho-para Wasserstoffumwandlung gemäß der in DE 4403352 beschriebenen Methode getestet. Vor der Bestimmung der ortho-para Umwandlung wurde die Probe bei 120 °C über 2 Stunden mit Wasserstoff gespült.

### Beispiel 4):

Das in Beispiel 3 hergestellte Material wurde nach der Trocknung bei 450 °C (Dauer 2h) an Luft thermisch behandelt und nach Abkühlung analog zu Beispiel 1 verarbeitet und getestet. Vor der Bestimmung der ortho-para Umwandlung wurde die Probe bei 120 °C über 2 Stunden mit Wasserstoff gespült.

### Beispiel 5): Herstellung eines reduzierten Eisenoxid-haltigen SAPO-Katalysators:

30 g der im Beispiel 1) getrockneten Katalysatorvorstufe (Fe-SAPO) wurden in einer Handpresse kompaktiert (ca. 100 bar), zerkleinert und über eine Siebung in verschiedene Korngrößenfraktionen aufgeteilt. Ca. 10 g der 0,3 - 0,8 mm Kornfraktion wurden in ein an beiden Enden verschließbares Quarzrohr gegeben, und in einem Röhrenofen unter einem Luftstrom von 50 ml/min auf 440 °C erhitzt und für 2 h unter diesen Bedingungen gehalten. Anschließend wurde unter Beibehaltung des Luftstromes auf 200 °C abgekühlt und der Gaseinlass auf Formiergas (ein H₂/N₂-Gemisch mit einem Wasserstoffanteil von 5 Vol.-%) umgestellt. Diese Bedingungen wurden 4 Stunden lang gehalten und danach auf RT unter Beibehaltung des Formiergasstromes abgekühlt. Erhalten wurden ca.10 g Material. Zur Bestimmung der ortho-para Umwandlungsaktivität wurde eine Probe davon im Reaktor bei 120 °C über 2 Stunden mit Wasserstoff gespült (Aktivierung) und die ortho-para Wasserstoffumwandlung gemäß der in DE 4403352 beschriebenen Methode getestet.

### Beispiel 6):

10 g des oben beschriebenen Ausgangsmaterials Ammonium-SAPO-34 wurden in einer Kugelmühle mit 0,185 g FeCl₂ 30 Minuten lang gemahlen und der Fe₂O₃ -Gehalt anschließend mit 1,5 Gew % bestimmt. Danach wurde das Material an Luft über 4 Stunden bei 450 °C behandelt und nach Abkühlung analog zu Beispiel 1 verarbeitet und getestet. Vor der Bestimmung der ortho-para Umwandlung wurde die Probe bei 120 °C über 2 Stunden mit Wasserstoff gespült.

### Beispiel 7):

10 g des oben beschriebenen Ausgangsmaterials Ammonium-SAPO-34 wurden in einer Kugelmühle mit 0,375 g FeCl₂ 30 Minuten lang gemahlen und der Fe₂O₃ -Gehalt anschließend mit 3 Gew % bestimmt. Danach wurde das Material an Luft über 4 Stunden bei 450 °C behandelt und nach Abkühlung analog zu Beispiel 1 verarbeitet und getestet. Vor der Bestimmung der ortho-para Umwandlung wurde die Probe bei 120 °C über 2 Stunden mit Wasserstoff gespült.

### Beispiel 8): Test Wasseraufnahme und Wasserabgabe:

5 g des in Beispiel 4) thermisch im Umluftofen bei 450 °C behandelten Fe-dotierten SAPO-Materials wurden für 24 h offen an der Luft stehen gelassen und dessen Wasseraufnahme mittels Gewichtsbestimmung bestimmt. Nach 340 min hatte die Probe 20 Gew.-% Wasser aufgenommen. Nach einer Lagerung von insgesamt 12 h betrug die Gewichtszunahme 1,08 g, entsprechend 21,8 Gew.-%. Die somit mit Wasser gesättigte Probe wurde anschließend im Trockenschrank 90 min lang bei 120 °C getrocknet und der Gewichtsverlust ( = Wasserverlust) bestimmt. Er betrug 1,08 g. Dies zeigt, dass das gesamte adsorbierte Wasser im erfindungsgemäßen Katalysator bei 120 °C vollständig entfernt werden kann. Damit eröffnet sich auch die Möglichkeit, den für einen Einsatz notwendigen Aktivierungsschritt des Umlagerungskatalysators unter milden Temperaturen durchführen zu können.

Alle mit der Methode DE 4403352 gemessenen Katalysatoren zeigen Umsätze von orthozu para-Wasserstoff. Die einzelnen Katalysatoren zeigen steigende Umsätze in der Reihenfolge der Beispiele 1 < 3 < 6 < 4 < 2 < 5 < 7. Die Umsatzrate steigt also mit steigendem Fe₂O₃ -Gehalt. Eine Vorkalzinierung an Luft des mit Flüssigphasenionentausch hergestellten Material bewirkt eine weitere Aktivitätssteigerung. Die über einen Festkörperionentausch hergestellten Katalysatoren zeigen ebenfalls eine vom Eisengehalt abhängende Aktivität jedoch auf einer noch höheren Ebene als die über einen Flüssigphasenionentausch hergestellten Proben.

## Patentansprüche

1. Verwendung eines Katalysators zur Umwandlung von Wasserstoff-Allotropen, vorzugsweise von ortho-Wasserstoff zu para-Wasserstoff und/oder umgekehrt, wobei der Katalysator ein Silico-Aluminophosphat (SAPO) ist.

2. Verwendung gemäß Anspruch 1, wobei der Katalysator ein mit einem Metall, vorzugsweise mit einem Metall ausgewählt aus der Gruppe bestehend aus Eisen, Rhodium, Nickel, Chrom und Molybdän, dotiertes Silico-Aluminophosphat (SAPO) ist.

3. Verwendung gemäß Anspruch 1 oder 2, wobei das Metall eine Fe-Verbindung, bevorzugt eine Fe-Sauerstoff-Verbindung, besonders bevorzugt ein Fe-Oxidhydrat, oder Mischungen davon, ist.

4. Verwendung gemäß einem der Ansprüche 1 bis 3, wobei das Silico-Aluminophosphat die Kristallstruktur CHA aufweist.

5. Verwendung gemäß einem der Ansprüche 2 bis 4, wobei der Katalysator einen Eisengehalt, bestimmt als Fe₂O₃, von 1 bis 20 Gew. %, bevorzugt von mindestens 5 Gew.-%, besonders bevorzugt von mindestens 10 Gew.-% aufweist.

6. Verwendung gemäß einem der Ansprüche 1 bis 5, wobei der Katalysator erhältlich oder erhalten ist durch ein Herstellverfahren, bei dem mindestens eine oxidative Temperaturbehandlung mit einer Sauerstoff/Inertgas-Mischung, vorzugsweise Luft, in einem Temperaturbereich zwischen 200 und 600 °C, vorzugsweise zwischen 300 und 500 °C, des Katalysators erfolgt.

7. Verwendung gemäß einem der Ansprüche 1 bis 6, wobei der Katalysator erhältlich oder erhalten ist durch ein Herstellverfahren, bei dem mindestens eine reduktive Temperaturbehandlung mit Wasserstoff, bevorzugt mit einer Wasserstoff/Inertgas-Mischung, besonders bevorzugt mit einer Wasserstoff/Stickstoff-Mischung, in einem Temperaturbereich zwischen 50 bis 500 °C, bevorzugt zwischen 100 bis 350 °C, besonders bevorzugt zwischen 120 bis 250 °C, des Katalysators erfolgt.

8. Verwendung gemäß einem der Ansprüche 1 bis 7, wobei der Katalysator mit einer Körnung von 0,2 mm bis 2 mm, bevorzugt kleiner als 1 mm, besonders bevorzugt kleiner 0,7 mm vorliegt.

9. Verwendung gemäß einem der Ansprüche 1 bis 8, wobei der Katalysator als Kugel vorliegt.

10. Verwendung gemäß einem der Ansprüche 1 bis 9, wobei der Katalysator als Formkörper, hergestellt durch Formgebungsprozesse, vorzugsweise ausgewählt aus der Gruppe bestehend aus Kompaktierung, Tablettierung, Granulation, Extrusion, Sprühtrocknung und Beschichtung von geometrischen Strukturen, Behältern oder Leitungen, eingesetzt wird.

11. Verwendung gemäß einem der Ansprüche 1 bis 10, bei der Herstellung von flüssigem Wasserstoff, dessen Lagerung und/oder Transport.

12. Verfahren zur Umwandlung von Wasserstoff-Allotropen, vorzugsweise von ortho-Wasserstoff zu para-Wasserstoff und/oder umgekehrt, umfassend oder bestehend aus folgenden Schritten:
- Bereitstellen eines Ausgangsgemisches aus oder umfassend ortho- und para-Wasserstoff,
- Abkühlen des Ausgangsgemisches und Umsetzen von ortho-Wasserstoff zu para-Wasserstoff unter Verwendung eines Katalysators wie in einem der vorangehenden Ansprüche definiert.
